# EUROPÄISCHE PATENTSCHRIFT

(11) **EP 0 819 073 B1**
(45) Veröffentlichungstag und Bekanntmachung des Hinweises auf die Patenterteilung: **06.06.2001**
(21) Anmeldenummer: 96945826.4
(22) Anmeldetag: 24.10.1996
(51) Int. Cl.: B60R 25/04

(54) **SICHERHEITSANORDNUNG GEGEN UNBEFUGTEN EINGRIFF**
PROTECTIVE DEVICE AGAINST UNAUTHORISED ACCESS
DISPOSITIF DE SECURITE EMPECHANT TOUT ACCES NON AUTORISE

(30) Priorität: 03.02.1996 DE 19603913
(43) Veröffentlichungstag der Anmeldung: 21.01.1998
(73) Patentinhaber: ROBERT BOSCH GMBH, 70442 Stuttgart (DE)
(72) Erfinder: ALVAREZ-AVILA, Carlos, D-71691 Freiberg (DE); HABERER, Helmut, D-70469 Stuttgart (DE)
(86) Internationale Anmeldenummer: DE9602015
(87) Internationale Veröffentlichungsnummer: WO9728027

(56) Entgegenhaltungen:
- EP-A- 0 335 166
- EP-A- 0 461 423
- FR-A- 2 685 267
- US-A- 4 149 609
- US-A- 4 422 314

## Beschreibung

### Stand der Technik

Die Erfindung geht von einer Sicherheitsanordnung nach der Gattung des Patentanspruchs 1 aus.

Bei einer durch die EP-A1-0 629 532 bekannten Anordnung ist ein einfacher Deckel vorgesehen, der eine elektrische Schaltung einschließend ein Magnetventil an einer Kraftstoffeinspritzpumpe umschließt. Der Deckel und die diesen mit der Kraftstoffeinspritzpumpe verbindende Schraubverbindung sind dabei so angeordnet, daß die Schraubverbindung nach Einbau der Einspritzpumpe nicht mehr zugänglich ist. Erst durch Entfernen der Pumpe kann der Deckel abgeschraubt und ein Zugang zu dem Magnetventil geschaffen werden. Solche Magnetventile dienen bei Kraftstoffeinspritzpumpen dazu, die Kraftstoffzufuhr zu den Pumpenarbeitsräumen der Kraftstoffeinspritzpumpe beim Stillstand bzw. Abstellen der Brennkraftmaschine zu verhindern. Vor Inbetriebnahme der Brennkraftmaschine muß ein solches Magnetventil geöffnet werden. Dies geschieht durch eine elektrische Steuereinrichtung, von der ein Teil bei der bekannten Ausführung innerhalb der Abdeckung liegt.

Will eine Person unbefugt die Brennkraftmaschine in Gang setzen, so könnte dies dadurch geschehen, daß am Magnetventil manipuliert wird. Dies ist allerdings nur möglich, wenn dieses auch zugänglich ist. Die sich unter der Abdeckung befindliche elektrische Schaltung verhindert, daß von außerhalb der Abdeckung ohne weiteres am Magnetventil manipuliert werden kann. Über Sicherheitscode und andere Sicherheitsmaßnahmen ist der elektrische Zugang zu dem Magnetventil verwehrt. Ein mechanischer Eingriff könnte nichts desto trotz die Funktionsfähigkeit des Magnetventils außer Kraft setzen und diese grundsätzlich in Offenstellung bringen. Damit wäre ein Entwenden des zu der Brennkraftmaschine gehörenden Fahrzeugs ermöglicht.

Die bekannte Sicherheitsanordnung soll dieses durch die vorgesehene Abdeckung verhindern. Die dort vorgesehene Abdeckung ist jedoch als einfaches Blechteil ausgeführt, das dennoch gewaltsam unter Eingriff von Hebelwerkzeugen oder schneidenden Werkzeugen geöffnet werden kann. In dem Falle wäre wiederum ein direkter Zugang zu dem Magnetventil ermöglicht.

Es ist ferner durch die US-A-4149609 eine gattungsgemäße Sicherheitsanordnung bekannt, mit der die Befestigung der Anschlüsse einer Zündspule vor einen unbefugten Zugriff geschützt werden sollen. Dazu ist auf die Stirnseite einer stabförmigen Zündspule, auf der die Niederspannungsanschlüsse der Spule neben dem zentralen Hochspannungsanschluß axial gerichtet angeordnet sind, eine Isolierkappe aufgesetzt, die als Basisteil einer darüber gestülpten Abdeckkappe dient, welche dabei die Schraubverbindungen der Niederspannnungszuleitungen zur Spule überdeckt. Die Verbindung zwischen Deckel und Basisteil erfolgt durch Nieten. Da als Material für das Basisteil eine Kappe aus Isolierstoff vorgesehen ist, besteht bei dieser bekannten Einrichtung die dennoch Gefahr, daß ein schneller gewaltsamer Zugriff zu dem zu schützenden Gegenstand erfolgen kann, da Isolationsstoff keine wesentliche mechanische Festigkeit aufweist. Dabei wird die zu schützende Zündspule nur in einem auf die Niederspannungsanschlüsse beschränkten Umfang gegen Eingriffe abgedeckt.

### Vorteile der Erfindung

Die erfindungsgemäße Sicherheitsanordnung hat dem gegenüber den Vorteil, daß grundsätzlich das Lösen der Verbindung zwischen Deckelteil und Bodenteil verhindert ist. Dadurch daß der Deckelteil den Basisteil so abdeckt, daß der Zugang zu dessen Befestigung am Gehäuse der Kraftstoffeinspritzpumpe nur durch Entfernen des Deckelteils möglich ist, ist ein hohes Maß an Sicherheit gewährleistet. Die Ausführung der komplementär zueinander verlaufenden Seitenwände und deren formschlüssiges Eingreifen ineinander verhindert, daß mit Werkzeugen ein gewaltsames Entfernen des Deckelteils zumindest in einer vorgeschriebenen Mindestzeit nicht möglich ist. Somit ist im Rahmen einer Vorgabezeit die Sicherheitsanordnung nicht so zerstörbar, daß ein Zugang zum Einstellelement oder zum Funktionselement, das z.B. ein Magnetventil sein kann, geschaffen werden kann. Diese Sicherheit wird besonders durch die Ausgestaltung nach Patentanspruch 2 erhöht, bei der eine besonders enge Passung zwischen dem haltenden Basisteil und dem Deckelteil erzielbar ist. Durch die Ausgestaltung nach Patentanspruch 3 ist die Sicherheitsanordnung so ausgeführt, daß sie spanenden und schneidenden Werkzeugen einen erheblichen Widerstand entgegensetzt. Der Manganhartstahl ist extrem schlecht spanend bearbeitbar und zudem auch schlagzäh. In vorteilhafter Weiterbildung steht der Deckel aus Gußstahl, so daß auch keine kerbempfindlichen Kanten die Widerstandsfähigkeit, insbesondere des Deckelteils herabsetzen. Besonders vorteilhaft ist gemäß der Ausgestaltung nach Patentanspruch 5 daß die Seitenwand des Deckelteils von der Seitenwand des Basisteils von außen umschlossen ist. Somit bieten sich keine wesentlichen, insbesondere keine stirnseiten Angriffsflächen am Deckelteil, die es erlauben würden unter Einwirkung von Gewalt den Deckel abzuhebeln. Der durch den Formschluß minimierte Spalt zwischen den Seitenwänden ist Hebelwerkzeugen nicht zugänglich.

In weiterhin vorteilhafter Ausgestaltung sind die den Deckelteil mit dem Basisteil verbindenden Schrauben so ausgebildet, daß sie nach der Befestigung des Deckels durch diese nicht ohne weiteres lösbar sind. Durch die fehlende Formschlußfläche, die in Öffnungsrichtung wirksam wäre, läßt sich die Schraube nicht mehr herausdrehen oder insbesondere nach Patentanspruch 7 durch das grundsätzliche Entfernen der Formschlußflächen wird ein Zugriff in Drehrichtung der Schraube verhindert. Weiterhin besteht die Verbindung aus Schrauben, die gemäß Anspruch 7 aus gehärtetem Stahl bestehen, und somit auch ein Aufbohren nicht ohne weiteres erlauben. In vorteilhafter Weise ist gemäß Patentanspruch 8 eine elektronische Sicherheitsschaltung innerhalb der Sicherheitsanordnung untergebracht, die einen elektrischen Durchgriff zu einem Funktionselement, wie z.B. ein Magnetventil bei einer Kraftstoffeinspritzpumpe, innerhalb des von der Sicherheitsanordnung eingeschlossenen Raumes nicht erlaubt. In angepaßter Ausführung an die Gegebenheiten der Kraftstoffeinspritzpumpe kann gemäß Patentanspruch 10 auch das Basisteil und der Deckelteil so ausgeführt werden, daß sie seitlich, also quer zur Ebene des Bodens des Basisteils an Gehäuse, die Sirnseiten vom Deckelteil und Basisteil an dieser Stelle verdeckend, eng anliegend angrenzen, derart, daß mit dem Gehäuse jeweils nur engste Spalte gebildet werden, die keinen Zugriff eines Hebelwerkzeuges erlauben.

### Zeichnung

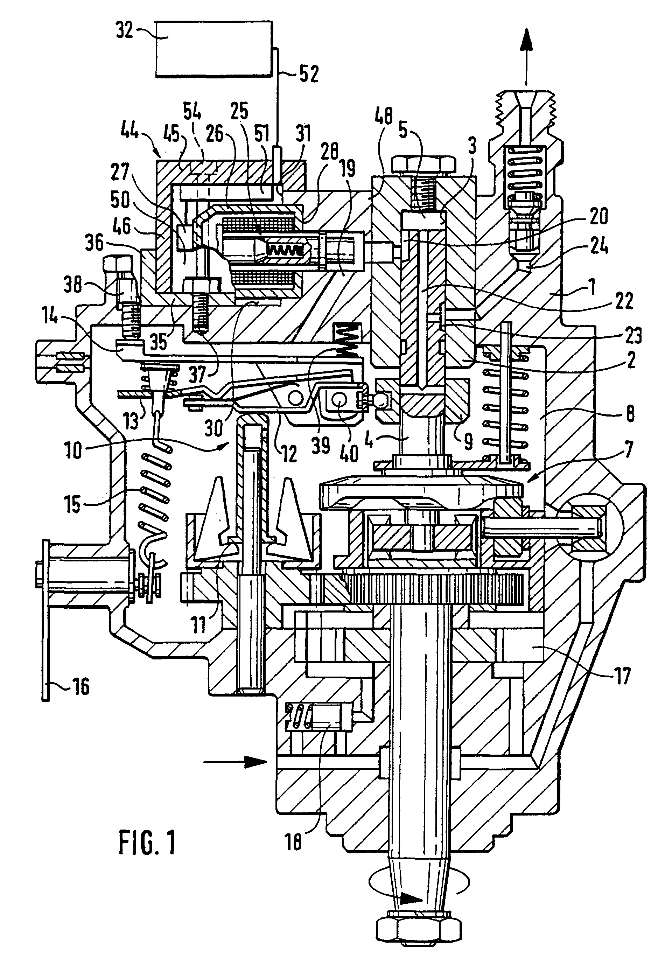

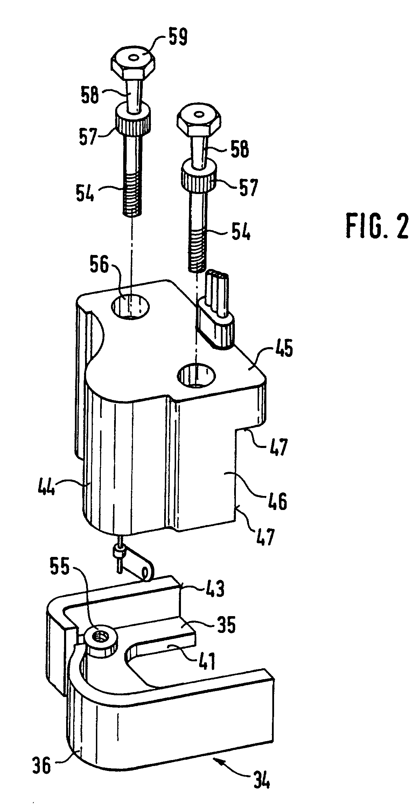

Ein Ausführungsbeispiel der Erfindung ist in der Zeichnung dargestellt und wird in der nachfolgenden Beschreibung näher erläutert. Es zeigen Figur 1 eine Kraftstoffeinspritzpumpe mit einem Elektromagnetventil als Funktionselement, das durch die Sicherheitsanordnung abgedeckt ist und Figur 2 eine perspektivische Darstellung des Basisteils und des Deckelteils mit zugehörigen Schrauben zu deren Befestigung.

### Beschreibung des Ausführungsbeispiels

Figur 1 zeigt einen Schnitt durch eine Verteilereinspritzpumpe mit einem Gehäuse 1, in das eine Zylinderbüchse 2 eingesetzt ist, die in ihrem Inneren einen einseitig geschlossenen Zylinder 3 aufweist, in dem durch einen in diesem Zylinder geführten Pump- und Verteilerkolben 4 mit dessen Stirnseite ein Pumpenarbeitsraum 5 eingeschlossen wird. Der Pump- und Verteilerkolben 4 wird dabei durch einen Nockenantrieb 7 in bekannter Art und Weise in eine hin- und hergehende und zugleich rotierende Bewegung versetzt. Nockenantriebsseitig ragt der Pump- und Verteilerkolben 4 in einen Pumpensaugraum 8, innerhalb dem auf der Mantelfläche des Pump- und Verteilerkolbens ein Regelschieber 9 durch einen Regler 10 verschiebbar ist. Der Regler 10 weist dazu einen Drehzahlsignalgeber 11 auf, der auf Reglerhebel 12 und 13 wirkt, die auf einen Einstellhebel 14 gelagert sind, und von denen einer mit dem Reglerschieber 9 gekoppelt ist und der andere von einer Feder 15 entgegen der vom Drehzahlsignalgeber 11 ausgeübten Kraft beaufschlagt wird. Die Vorspannung dieser Reglerfeder 15 ist durch eine Verstellhebel 16 von außerhalb der Einspritzpumpe entsprechend dem Drehmoment bzw. Drehzahlwunsch verstellbar.

Der Pumpenarbeitsraum 5 wird aus dem Pumpensaugraum 8 mit Kraftstoff versorgt, der wiederum von einer Kraftstofförderpumpe 17 in Verbindung mit einem Drucksteuerventil 18 auf einen drehzahlabhängigen Druck gebracht ist. Dabei ist der Pumpensaugraum über eine Saugleitung 19 mit dem Zylinder 3 verbindbar, wenn durch den Pump- und Verteilerkolben 4 eine entsprechende Saugnut 20 am Umfang des Pump- und Verteilerkolbens 4 in Überdeckung mit der Eintrittsöffnung der Saugleitung 19 gebracht wird. In dieser Stellung kann der Pumpenarbeitsraum 5 mit Kraftstoff gefüllt werden, wobei der Füllvorgang im Laufe der weiteren Drehung des Pumpenkolbens 4 unterbrochen wird und anschließend ein Hochdruckförderhub des Pumpenkolbens 4 erfolgen kann. Dabei fördert der Pumpenkolben über einen Längskanal 22 und einer Verteilernut 23 Kraftstoff zu einer von mehreren am Umfang des Zylinders 3 verteilt angeordneten Einspritzleitungen 24, die ihrerseits jeweils mit einem Kraftsoffeinspritzventil an der Brennkraftmaschine verbunden sind. Die Förderung aus dem Pumpenarbeitsraum wird dann unterbrochen, wenn eine den Längskanal 22 schneidende Querbohrung durch den Ringschieber 9 im Laufe des Pumpenkolbenförderhubs zum Pumpensaugraum hin geöffnet wird.

Zur Stillsetzung der Brennkraftmaschine bzw. zur Unterbindung der Hochdruckförderung ist die Saugleitung 19 durch ein Magnetventil 25 verschließbar. Dieses Magnetventil ist im gezeigten Ausführungsbeispiel in eine parallel zur Achse des Pump- und Verteilerkolbens 4 sich erstreckende Wand des Gehäuses 1 eingesetzt. Dabei ragt das Magnetventil mit seinem Gehäuse 26, das die Magnetspule und den Magnetkern umfaßt sowie der elektrische Anschluß 27 des Magnetventils aus der Aufnahmebohrung 28 des Gehäuses 1 nach außen heraus. Parallel zur Achse des Magnetventils liegt eine ebene Fläche 30, die senkrecht zur die Aufnahmebohrung 28 aufnehmenden Wand 31 des Gehäuses liegt.

An dem elektrischen Anschluß 27 des Magnetventils wurde bislang in einer ungeschützten Ausführung eine Steuerleitung angeschlossen, die gesteuert von einer Steuereinrichtung 32 im Bedarfsfall den Elektromagneten des Magnetventils erregt hat und das Ventil in Offenstellung gebracht hat. Ab diesem Moment konnte die Kraftstoffeinspritzpumpe betrieben werden. Eine Dieselbrennkraftmaschine ist aber nun bereits dann betreibbar, wenn, ohne elektrische Steuerung in Anspruch zu nehmen, die Zylinder der Brennkraftmaschine mit Kraftstoff versorgt werden und die Kolben der Brennkraftmaschine in irgend einer Art und Weise in Bewegung gesetzt werden. Demzufolge konnte eine solche Dieselbrennkraftmaschine beim Öffnen des Magnetventils ohne weiteres auch von nichtberechtigten Personen in Betrieb genommen werden. Eine elektrische Zuleitung zum Magnetventil konnte auch ersatzweise gelegt werden oder auch auf andere Art und Weise das Magnetventil soweit funktionsunfähig gemacht werden, daß die Saugleitung 19 nicht mehr verschlossen ist.

Um solchen unbefugten Eingriffen vorzubeugen ist nun erfindungsgemäß der Zugang zum Magnetventil 25 verhindert. Dazu ist auf der ebenen Fläche ein Basisteil 34 eine Sicherheitsanordnung befestigt. Dieses besteht aus einem Boden 35, der eben auf der Fläche 30 aufliegt und einer den Boden umgebenden Seitenwand 36. Der Boden 35 besitzt eine Bohrung zur Durchführung einer Befestigungsschraube 37, die in die Wand des Gehäuses 1 eingeschraubt wird. In der Figur 2 ist das Basisteil 34 perspektivisch dargestellt. Man erkennt dort die Seitenwand 36, die umfangsseitig so geformt ist, daß sie Platz für eine Einstellschraube 38 an der Einspritzpumpe läßt, mit der der Einstellhebel 14 des Reglers zur Einstellung der Grundeinstellung des Regelschiebers 9 entgegen der Kraft einer Rückstellfeder 39 um seine Achse 40 schwenkbar ist. Der ebenfalls gezeigte Boden hat wiederum eine u-förmige Ausnehmung 41, die es erlaubt, das Basisteil 34 unterhalb des Gehäuses 26 des Magnetventils einzuschieben. Die Seitenwand 36 des Basisteils umgibt den Boden 35 nicht vollständig sondern endet mit einer ebenen Stirnseite 43, die im in Figur 1 gezeigten eingebauten Zustand in Anlage an die Wand 31 gelangt derart, daß die Stirnseite durch diese Wand völlig verdeckt wird. Somit kann an dieser Stelle kein hebelndes Werkzeug zwischen Wand 31 und Seitenwand 36 eingesetzt werden. Auch der Boden sitzt auf der ebenen Fläche 30 bündig auf, so daß auch hier das Einsetzen eines hebelnden Werkzeuges nicht möglich ist.

Um nun das Gehäuse 26 des Magnetventils 25 völlig abzudecken ist ein Deckelteil 44 vorgesehen, der ebenfalls einen Boden 45 und eine Seitenwand 46 aufweist. Diese ist komplementär zu der Seitenwand 36 ausgeführt derart, daß die Seitenwand 43 formschlüssig bündig in die durch Seitenwand 36 und Boden 35 des Basisteils 34 gebildete Aufnahme einsteckbar ist, so wie in Figur 1 gezeigt. Durch die komplementäre Anpassung der Seitenwände 43 und 36 ist es hiermit auch verwehrt, daß ein hebelndes Werkzeug zwischen den Seitenwänden eingesetzt werden kann. Die Seitenwand 43 des Deckelteils umschließt den Boden ähnlich, wie beim Basisteil 34 ebenfalls nicht vollständig, sondern endet ebenfalls in einer ebenen Stirnseite 47, die gleicherweise in Anlage an die Wand 31 bzw. an eine an diese rechtwinklig sich ansetzende weitere Wand 48 des Gehäuses 1 zur Anlage kommt. Somit umschließt der Deckelteil 44 das Magnetventil völlig.

Innerhalb des so gebildeten, geschlossenen Raumes 50 ist eine elektrische Sicherheitsschaltung 51 angeordnet, die vorzugsweise am Boden 45 des Deckelteils befestigt ist. Zu dieser Sicherheitsschaltung 51 führt eine Zuleitung 52 von der Steuereinrichtung 32 her und es ist die Sicherheitsschaltung 51 weiterhin mit dem elektrischen Anschluß 27 des Magnetventils 25 zu dessen Ansteuerung verbunden.

Zur Gewährleistung der sicheren und nicht lösbaren Verbindung zwischen Basisteil 34 und Deckelteil 44 wird der Deckelteil mittels Schrauben 54 auf das Basisteil geschraubt. Hierzu sind auf dem Boden 35 Gewindemuffen 55 vorgesehen, in die die Enden der Schrauben 54 eingeschraubt werden können. Der Boden des Deckelteils hat dabei eine Aufnahmebohrung 56 in der ein Kopf 57 der Schrauben 54 in Einschraubrichtung kraftschlüssig zur Anlage kommt. Dies geschieht in bekannter Weise durch die Ausbildung einer Stufenbohrung. Der zylindrisch ausgebildete Kopf 57 hat nur ein geringes seitliches Spiel zur angrenzenden Bohrung 56 und verschwindet dabei völlig innerhalb dieser Bohrungen 56 im eingeschraubten Zustand der Schrauben. Das Eindrehen der Schrauben erfolgt über Zapfen 58, die am Ende eine Formschlußfläche 59 tragen in Form des bekannten Sechskants.

Über diese Formschlußflächen wird das Einschraubdrehmoment aufgebracht und anschließend der Zapfen abgebrochen. Der Kopf 57 der Schrauben hat keinerlei Formschlußflächen, so daß die Schrauben nach Entfernen des Zapfens 58 nicht mehr ohne weiteres entfernbar sind. Zur Erschwerung eines Eingriffs an dieser Stelle sind die Schrauben ferner aus gehärtetem Stahl gefertigt, so daß sie nicht ohne weiteres aufbohrbar sind und mit einem Linksgewindebohrer aufdrehbar wären.

Zur weiteren Sicherung gegen unberechtigten Zugriff ist vorzugsweise das Basisteil 34 und das Deckelteil 44 jeweils aus Mangan- Hartstahl gefertigt, der sich äußert schlecht spanend bearbeiten läßt und eine hohe Schlagfestigkeit aufweist. Auf Grund dieser Materialeigenschaften ist ein Zugriff auf gewaltsame Art und Weise äußerst erschwert, so daß ein Unberechtigter, der hier gewaltsam Zugang zum Magnetventil bekommen will erhebliche Zeit benötigt, um zum Erfolg zu kommen. Diese Zeit wird als Sicherheitszeitspanne zum Zwecke des Diebstahlschutzes von Kraftfahrzeugen vorgegeben. Aufgrund der innerhalb des Raumes 50 vorhandenen Sicherheitsschaltung ist auch eine Manipulation über die Zuleitung 52 und damit ein Öffnen des Magnetventils auf diesem Wege nicht ohne weiteres möglich. Hier wird mit entsprechenden Codes der Zugang sicher verwehrt.

Das beschriebene Beispiel richtet sich in der Detailausführung wesentlich nach der Einbaulage des Magnetventils. Die Konstruktionsprinzipien können auch bei anderen Einbauorten des Magnetventils entsprechend berücksichtigt werden. So ist es möglich, bei entsprechendem Platzangebot den Deckelteil als topfförmigen Teil auszuführen, der den herausragenden Elektromagneten allseitig umschließt und bündig die Öffnung eines entsprechenden Basisteils mit umlaufender Seitenwand verschließt. Dieses Basisteil ist dann zentrisch zum Magnetventil auf die Stirnseite des Gehäuses aufgesetzt und dort befestigt. Die Form der Seitenwände kann entsprechend dem Einbauort wie bereits im vorliegenden Beispiel gezeigt abgewandelt werden um dazu eventuell vorhandene Elemente der Pumpe zu schaffen.

## Patentansprüche

1. Sicherheitsanordnung gegen unbefugten Eingriff zu einem Element einer Einrichtung, mit einem Basisteil (34), das einen Boden (35) und eine den Boden wenigstens zum Teil umfangseitig umgebenden Seitenwand (36) aufweist, und das mittels eines den Boden (35) durchdringenden Verbindungelements (37) mit dem Gehäuse (1) der Einrichtung lösbar verbindbar ist, und mit einem Deckelteil (44), der einen Boden (45) aufweist, der von einer zur Seitenwand (36) des Basisteils (34) komplementär verlaufenden Seitenwand (46) wenigstens zum Teil umgeben ist, formschlüssig zur Seitenwand (36) des Basisteils (34) auf das Basisteil aufsetzbar ist und mittels einer nur durch Zerstörung lösbaren, gegen Eingriff gesicherten Verbindung (54) mit dem Basisteil (34) verbunden ist und mit seiner von der Seitenwand (46) und/oder von der angrenzenden Wand (31) des Gehäuses (1) begrenzten Öffnung zusammen mit dem Basisteil (34) und/oder der angrenzenden Wand (30, 31) des Gehäuses (1) einen Raum (50) einschließt, innerhalb dem das Element angeordnet ist, dadurch gekennzeichnet daß, das Element ein Einstell- oder Funktionselement (25) einer Kraftstoffversorgungseinrichtung, insbesondere einer Kraftstoffeinspritzpumpe, ist, und daß zumindest der Deckelteil (44) aus verschleißfestem zähem Mangan-Hartstahl besteht.

2. Sicherheitsanordnung nach Anspruch 1, dadurch gekennzeichnet, daß zumindest der Deckelteil (44) aus Gußstahl besteht.

3. Sicherheitsanordnung nach Anspruch 2, dadurch gekennzeichnet, daß die Seitenwand (46) des Deckelteils (44) von der Seitenwand (36) des Basisteils (34) von außen umschlossen wird.

4. Sicherheitsanordnung nach einem der Ansprüche 1 bis 3, dadurch gekennzeichnet, daß als Verbindung der Deckelteils (44) mit dem Basisteil (34) wenigstens eine mit einer nur in Einschraubrichtung wirksamen Formschlußfläche versehene Schraube verwendet wird.

5. Sicherheitsanordnung nach einem der Ansprüche 1 bis 3, dadurch gekennzeichnet, daß als Verbindung der Deckelteils (44) mit dem Basisteil (34) wenigstens eine mit einer entfernbaren Formschlußfläche (59) versehene Schraube (54) verwendet wird.

6. Sicherheitsanordnung nach einem der Ansprüche 4 oder 5, dadurch gekennzeichnet, daß die Schraube aus gehärtetem Stahl besteht.

7. Sicherheitsanordnung nach einem der Ansprüche 1 bis 3, dadurch gekennzeichnet, daß im zwischen Basisteil (34) und Deckelteil (44) eingeschlossenen Raum (50) eine elektronische Sicherheitsschaltung (51) angeordnet ist, die mit einem elektrisch betätigbaren Funktionselement (25) elektrisch verbunden ist und über einen durch eine Wand des Basisteil oder des Deckelteils hindurchgeführten Anschluß (52) mit Strom versorgt wird.

8. Sicherheitsanordnung nach Anspruch 6, dadurch gekennzeichnet, daß die Sicherheitsschaltung (51) am inneren Boden des Deckelteils (44)befestigt ist.

9. Sicherheitsanordnung nach Anspruch 1, dadurch gekennzeichnet, daß jeweils der Boden (35) des Basisteils (34) und der Boden (45) des Deckelteils (44) nur zum Teil von der jeweiligen Seitenwand (36, 46) umgeben ist, die mit der umfangsseitigen Stirnseite (43, 47) zumindest des Deckelteils (44) an eine Wand (31) des Gehäuses (1) eng anliegend angrenzt und der Boden (35) des Basisteils (34) ebenfalls an der ihm gegenüberliegenden Gehäusefläche (30, 31) eng anliegt.

## Claims

1. Protective arrangement against unauthorized interference with an element of a device, having a foot part (34) which has a base (35) and a side wall (36) at least partly surrounding the base at the periphery and which can be detachably connected to the housing (1) of the device by means of a connecting element (37) passing through the base (35), and having a lid part (44) which has a base (45) at least partly surrounded by a side wall (46) running in a complementary manner to the side wall (36) at the foot part (34), can be mounted on the foot part (34) in a positive-locking manner relative to the side wall (36) of the foot part, can be connected to the foot part (34) by means of a connection (54) detachable only by destruction and protected against interference, and encloses a space (50) with its opening, defined by the side wall (46) and/or by the adjoining wall (31) of the housing (1), together with the foot part (34) and/or the adjoining wall (30, 31) of the housing (1), within which space (50) the element is arranged, characterized in that the element is a setting or functional element (25) of a fuel supply device, in particular of a fuel injection pump, and in that at least the lid part (44) is made of wear-resistant, tough austenitic manganese steel.

2. Protective arrangement according to Claim 1, characterized in that at least the lid part (44) is made of cast steel.

3. Protective arrangement according to Claim 2, characterized in that the side wall (46) of the lid part (44) is enclosed on the outside by the side wall (36) of the foot part (34).

4. Protective arrangement according to one of Claims 1 to 3, characterized in that at least one screw provided with a positive-locking surface which is effective only in the screw-in direction is used as the connection between the lid part (44) and the foot part (34).

5. Protective arrangement according to one of Claims 1 to 3, characterized in that at least one screw (54) provided with a removable positive-locking surface (59) is used as the connection between the lid part (44) and the foot part (34).

6. Protective arrangement according to either of Claims 4 and 5, characterized in that the screw is made of hardened steel.

7. Protective arrangement according to one of Claims 1 to 3, characterized in that an electronic protective circuit (51) is arranged in the space (50) enclosed between foot part (34) and lid part (44), which protective circuit (51) is electrically connected to an electrically operable functional element (25) and is supplied with current via a connection (52) passed through a wall of the foot part or of the lid part.

8. Protective arrangement according to Claim 6, characterized in that the protective circuit (51) is fastened to the inner base of the lid part (44).

9. Protective arrangement according to Claim 1, characterized in that in each case the base (35) of the foot part (34) and the base (45) of the lid part (44) are only partly surrounded by the respective side wall (36, 46), which, with the peripheral end face (43, 47) of at least the lid part (44), adjoins a wall (31) of the housing (1) so as to bear tightly against the said wall (31), and the base (35) of the foot part (34) likewise bears tightly against the housing surface (30, 31) opposite it.

## Revendications

1. Dispositif de sécurité empêchant tout accès non autorisé à un élément d'un dispositif, dans lequel :
• une pièce de base (34) présente un fond (35) entouré, sur au moins une partie de sa périphérie, par une paroi latérale (36) et qui peut être relié de manière amovible au boîtier (1) du dispositif par l'intermédiaire d'un élément de liaison (37) traversant le fond (35),
• une pièce de couvercle (44) présente un fond (45) entouré sur au moins une partie de sa périphérie par une paroi latérale (46) complémentaire de la paroi latérale (36),
• la pièce de couvercle (44) est appliquée avec verrouillage par combinaison de formes sur la paroi latérale (36) de la pièce de base (34) et reliée à celle-ci par une liaison (54) qui ne peut être rompue que par destruction et est garantie contre tout accès,
• la pièce de couvercle (44), avec son ouverture délimitée par la paroi latérale (46) et/ou par la paroi (31) en limite du boîtier (1), enferme avec la pièce de base (34) et/ou la paroi (30, 31) en limite du boîtier (1), un espace (50) à l'intérieur duquel se trouve l'élément,
caractérisé en ce que
l'élément est un élément de réglage ou un élément fonctionnel (25) faisant partie d'un dispositif d'alimentation en carburant, en particulier une pompe d'injection de carburant, et au moins la pièce de couverture (44) est faite d'un acier dur au manganèse, résistant à l'abrasion.

2. Dispositif de sécurité selon la revendication 1,
caractérisé en ce qu'
au moins la pièce de couvercle (44) est en acier coulé.

3. Dispositif de sécurité selon la revendication 2,
caractérisé en ce que
la paroi latérale (46) de la pièce de couvercle (44) est entourée extérieurement par la paroi latérale (36) de la pièce de base (34).

4. Dispositif de sécurité selon l'une quelconque des revendications 1 à 3,
caractérisé en ce que
pour relier la pièce de couvercle (44) à la pièce de base (34), on utilise au moins une vis munie d'une portée de verrouillage par combinaison de formes, active seulement dans le sens du vissage.

5. Dispositif de sécurité selon l'une quelconque des revendications 1 à 3,
caractérisé en ce que
pour relier la pièce de couvercle (44) à la pièce de base (34), on utilise au moins une vis (54) munie d'une portée de verrouillage par combinaison de formes (59) pouvant être retirée.

6. Dispositif de sécurité selon l'une des revendications 4 ou 5,
caractérisé en ce que
la vis est en acier durci.

7. Dispositif de sécurité selon l'une quelconque des revendications 1 à 3,
caractérisé en ce que
dans l'espace (50) fermé situé entre la pièce de base (34) et la pièce de couvercle (44), est monté un circuit électronique de sécurité (51) qui est relié à un élément fonctionnel (25) actionnable électriquement et alimenté en courant par une connexion (52) traversant une paroi de la pièce de base ou de la pièce de couvercle.

8. Dispositif de sécurité selon la revendication 6, caractérisé en ce que
le circuit de sécurité (51) est fixé sur la face interne du fond de la pièce de couvercle (44).

9. Dispositif de sécurité selon la revendication 1,
caractérisé en ce que
le fond (35) de la pièce de base (34) et le fond (45) de la pièce de couvercle (44) ne sont entourés chacun qu'en partie par la paroi latérale correspondante (36, 46), cette paroi, avec la face frontale (43, 47) située vers la périphérie d'au moins la pièce de couvercle (44), est étroitement appliquée sur une paroi (31) du boîtier (1), tandis que le fond (35) de la pièce de base (34) est également étroitement appliqué sur la portée de boîtier (30, 31) lui faisant face.
